# EUROPEAN PATENT APPLICATION

(11) **EP 1 300 970 A1**
(43) Date of publication of application: **09.04.2003**
(21) Application number: 02022519.9
(22) Date of filing: 07.10.2002
(51) Int. Cl.: H04J 3/16

(54) **Frame generator with multiplexer implemented on programmable FPGA devices for SDR applications,frame generation method and transmission system**

(30) Priority: 05.10.2001 IT MI20012061
(71) Applicant: Marconi Mobile SpA, 16153 Genoa (IT)
(72) Inventor: Casciani, Giulio, 16153 Genova (IT)
(74) Representative: Faraggiana, Vittorio, Dr. Ing.

(57) **Abstract**

A frame generator (10) in a programmable FPGA device for SDR applications is used for stranding at output in predetermined frames a plurality of incoming symbols. The generator (10) comprises a memory unit (12) whose memory cells each contain a code associated with a symbol of the plurality. A counter (11) addresses the memory cells sequentially to cause to emit to the memory (12) in sequence predetermined symbol codes to form a desired frame. A decoder (13) decodes the code at output from the memory (12) and commands a multiplexer (14) on the basis of the result of the decoding to start the incoming symbols (15) in sequence at output (16).

## Description

The present invention relates to a frame generator implemented on Field Programmable Gate Array (FPGA) devices for SDR applications. The present invention also relates to a generation method and a telecommunication system employing said generator and method.

In radio equipment there are often devices having asynchronous multiplexer functions, i.e. the capability of combining a certain number of signal sources having different bit frequencies or associated with different clocks.

The support structure of an asynchronous multiplexer system is the frame, an orderly sequence of symbols (slots) each having a different meaning (alignment, control, traffic, et cetera). Each slot has a definite sequential hence temporal position in the frame.

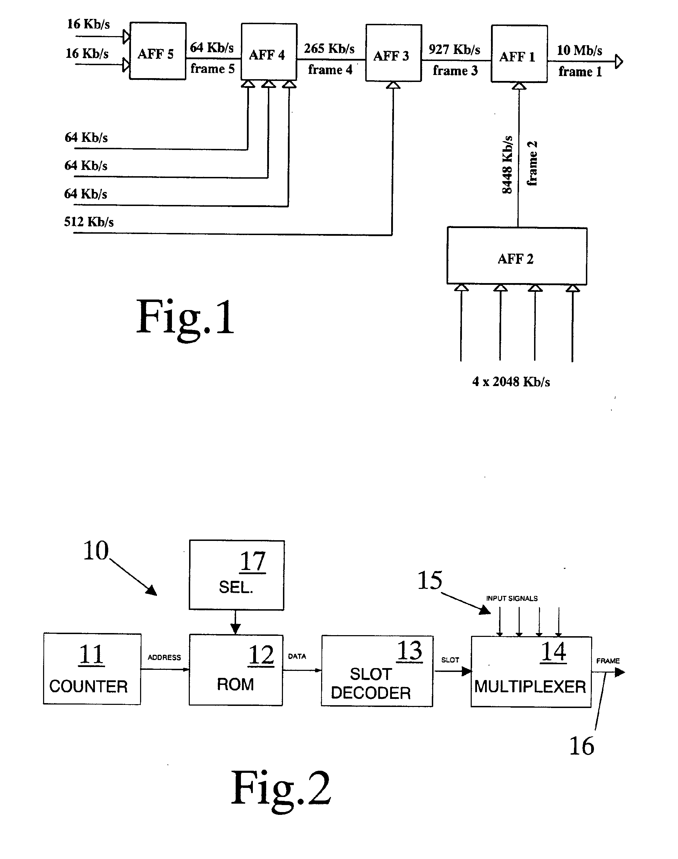

A typical representation of a frame is a matrix form in which each slot is determined by a pair of coordinates (rows and columns). This representation also lends itself to the practical implementation of a frame generator realized with a row counter, a column counter and a slot decoder (see FIG 1) to produce a sequence of SLOT signals.

The various SLOT signals enable in a mutually exclusive manner different switches in the multiplexer so as to enable the transit of only one of the incoming signals to the outlet. In this manner the output signal (FRAME) is made up of a multiplexed sequence of data packages.

Different uses require different frames as to both composition and size. The capability of implementing different multiplexer frame generators in single device is however connected to implementation of different structures of the above described type.

In the field of transmissions the above described devices are usually implemented in equipment termed stranding machines. This equipment receives an incoming plurality of data flows and composes them appropriately in frames. For example, in a typical embodiment the apparatus strands the incoming flows to the radio apparatus, i.e. all signals coming from users, so as to present to the modulator a 10 Mb/s NRZ data flow in code and the clock associated with 10 MHz. In base band the strander handles the following signals:
- 4 2048 kb/s flows with HDB3 code disrupted on 75 ohm or with HDB3 code balanced on 120 ohm or with 100% AMI code balanced on 130 ohm,
- 1 512 kb/s flow with 100% AMI code balanced on 130 ohm;
- 3 64 kb/s flows with codirezional code balanced on 120 ohm, and
- 2 16 kb/s flows with 2-phase code balanced on 130 ohm.

All the flows are dedicated to the external users with the exception of one of the 16 kb/s flows which is used as an in the clear or enciphered service channel.

The stranding takes place in successive steps and the formation of the 10 Mb/s frame is accomplished by the use of various subframes. In particular, first a 64 kb/s subframe is obtained by stranding the two 16 kb/s flows, i.e. the 16 kb/s data channel and the service channel (clear/enciphered). The subframe thus obtained is stranded with the other three 64 kb/s flows so as to obtain a 265 kb/s subframe which is in turn stranded with the 512 kb/s flow to obtain a new 927 kb/s subframe. Lastly, the main 10 Mb/s frame is obtained by stranding the 927 kb/s subframe with an 8448 kb/s subframe obtained by stranding the four 2048 kb/s flows.

Since the multiplexing or stranding mode can vary depending on the number of channels involved and the associated bit rate, to obtain a flexible combination system capable of operating in different configurations it is necessary to develop an equally flexible hardware base.

The so-called Software Defined Radios (SDR) are devices allowing obtaining the desired flexibility with greater naturalness since they are capable of adapting to different operating requirements with no need of changing their physical structure but only changing the internal firmware which implements the various functions. In particular, in FPGA applications the counters can be programmed but the slot decoder is obviously associated with a specific frame. In a strander of the above type with a five-subframe structure the prior art frame-generating modules are to be instanced differently five times (one for each subframe) with the resulting expenditure of logical resources.

As the strander changes (number, type, subframe size) it also becomes necessary to draw up a new code for the description of the new networks and reconfigure the device employed (FPGA). In SDR systems with FPGA provided in accordance with the prior art it is thus necessary to reprogram the entire FPGA to be able to change the frame produced. This requires performing the entire design, implementation and testing cycle just of the development of designs with FPGA. In the prior art, changing the frames produced or the need to pass from one type of frame to another thus cause considerable cost and time problems. In addition, considerable difficulties are met in producing devices allowing the user to select a frame from among various preset types because of the need to reproduce in the FPGA an entire frame generation system for each frame it is desired to produce.

The general purpose of the present invention is to remedy the above mentioned shortcomings by making available the capability of implementing more rapidly and with greater efficiency different multiplexer frame generators for stranding in a single FPGA device.

In view of this purpose it was sought to provide in accordance with the present invention a frame generator in a programmable FPGA device for SDR applications for stranding at output in predetermined frames a plurality of incoming symbols characterized in that it comprises a memory unit whose memory cells each contain a code associated with a plurality symbol, a counter addressing sequentially the memory cells to cause the memory to emit in sequence predetermined symbol codes for forming a desired frame, a decoder decoding the code output from the memory and commanding a multiplexer on the basis of the result of the decoding to start the incoming symbols in sequence at output. Again in accordance with the present invention it was sought to realize a method for the generation of frames in a programmable FPGA device for SDR applications for stranding at output in predetermined frames a plurality of incoming signals comprising the steps of memorizing in cells of a memory unit codes associated each with a symbol of said plurality, addressing sequentially the memory cells to cause the memory to emit in predetermined sequence the codes of the symbols required to make up a desired frame, decoding the code output from the memory and commanding a multiplexer on the basis of the result of the decoding to start in sequence at output the incoming symbols in accordance with the desired frame.

It was also sought to realize a telecommunication system with said generator.

To clarify the explanation of the innovative principles of the present invention and its advantages compared with the prior art there is described below with the aid of the annexed drawings a possible embodiment thereof by way of non-limiting example applying said principles. In the drawings:
FIG 1 has a block diagram showing the formation of a 10 Mb/s frame, and
FIG 2 shows a block diagram of a multiplexer frame generator embodied in accordance with the present invention.

With reference to the figures, FIG 1 shows the formation of a 10 Mb/s frame. As may be seen in the figure, formation of the 10 Mb/s frame is accomplished by using some subframes structured on five different hierarchical levels each obtained with a suitable strander, as follows.
FRAME_5: 64 kb/s subframe obtained by stranding the two 16 kb/s flows, i.e. the 16 kb/s data channel and the service channel.
FRAME_4: 265 kb/s subframe obtained by stranding FRAME_5 with the other three 64 kb/s flows.
FRAME_3: 927 kb/s subframe obtained by stranding FRAME_4 with the 512 kb/s flow.
FRAME_2: 8448 kb/s subframe obtained by stranding the four 2048 kb/s flows.
FRAME_1: Main 10 Mb/s frame obtained by stranding 927 kb/s FRAME_3 with 8448 kb/s FRAME_2.

As mentioned above, a frame is a temporal sequence of a certain number of different symbols (or slots) each of which is associated with a particular type of information. In a typical frame there can be from 10 to 12 different symbols.

It is thus possible to define a 4 bit code to identify each of these symbols.

The following table shows a possible example of such a coding.

| encoding bits | Meaning of slot shown |
|---|---|
| 0000 | Alignment word |
| 0001 | Channel 1 main traffic |
| 0010 | Channel 1 justification control |
| 0011 | Channel 1 justification |
| 0100 | Coding redundancy |
| | |

As a result in this manner the decoding network associated with said structure can remain unchanged with respect to the particular frame to be implemented because each component symbol will always have the same encoding code regardless of its position in the temporal sequence.

A tabular structure like that shown above is usefully memorizable in a ROM from which the frame slot temporal succession is obtained by an updating of memory addresses.

FIG 2 shows the diagram of a frame generator 10 in accordance with the present invention.

The counter 11 addresses in succession with continuity each memory location (ADDRESS signals) of a ROM unit 12. The ROM consequently emits in sequence prememorized data (DATA signals) each of which encodes a symbol in accordance with the above table. In the memory the 4 bits encoding each symbol of the frame occupy a precise memory location and therefore the continuous addressing brings on the temporal sequence of slots making up the frame.

The data output from the ROM are sent to a slot decoder 13 which decodes the data in binary form output from the ROM and translates them into the slot sequence making up the frame.

In other words, the decoder decodes the incoming 4-bit binary code to activate exclusively one of its own outputs (which are equal in number to the slots) and corresponds to the incoming binary address.

The slot signals are sent to a multiplexer 14 reached by the incoming signals 15 which are to be composed in the frame.

The multiplexer connects at the output 16 the inputs 15 in the sequence commanded by the signals output from the decoder. The desired frame is thus found at the output 16 of the multiplexer.

Implementation of the various blocks of FIG 2 is readily imaginable to those skilled in the art and is therefore not further described nor shown in detail.

A structure like that describe lends itself particularly well to implementation on a programmable device equipped with a certain number of memory blocks on the chip. For example, the device XCV800 produced by the Birtex co. is equipped with 20 memory blocks with 4096 bits each which can be configured depending on the user's needs. In our case a configuration of the memory blocks as ROM with 1024X4 bits proves useful.

Different frames of course find their position in the memory with no need of installing further logical resources as happens with repetition of the row and column structure of the prior art. Selector means 17 allow selection of one of the various memory blocks so as to select the desired frame from among the plurality of frames provided.

A typical frame length could be approximately 100 symbols. In this situation a single memory of the above type can support up to approximately ten different frames (remembering that there are twenty memories on the device described as an example) among which to choose rapidly.

Compared to the traditional structure the new technique also has the advantage of extending the number or type of frame implemented without the need of recharging the entire FPGA configuration file. By using DPRAM instead of ROM the updating and/or extension operation translates into the writing of a sequence of instructions in various memory locations at the expense of any external control device such as a microprocessor.

In addition, with the new structure proposed there is only one repetition of the encoding table associated with the various slots (which, being in ROM, are not associated with logical resources) and one repetition of the only decoding networks (all the same because the various slots always keep the same meaning regardless of their position in the temporal sequence).

With strander change (number/type/subframe size) only the loading/updating of the various decoding memories becomes necessary and not the drawing up of a new code (the decoding networks are always the same).

Updating does not require reconfiguration of the logical device but only of the writing operations in its internal memories and hence, when required, immediate switching to the new operation mode (adaptability required in SDR applications).

It is now clear that the predetermined purposes have been achieved by making available a simple and flexible implementation of a frame generator in an FPGA.

The telecommunication system realized employing said generator is in itself virtually known and not further shown nor described as it is readily imaginable to those skilled in the art.

Naturally the above description of an embodiment applying the innovative principles of the present invention is given by way of non-limiting example of said principles within the scope of the exclusive right claimed here. For example the number of bits for each word of the memory can vary depending on specific practical requirements.

## Claims

1. Frame generator in a programmable FPGA device for SDR applications for stranding at output in predetermined frames a plurality of incoming symbols **characterized in that** it comprises a memory unit having memory cells each containing a code associated with a symbol of the plurality, a counter addressing the memory cells sequentially to cause the memory to emit in predetermined sequence the symbol codes required for forming a desired frame, a decoder decoding the code output from the memory and commanding a multiplexer on the basis of the result of the decoding to start the incoming symbols in sequence at output in accordance with the desired frame.

2. Generator in accordance with claim 1 **characterized in that** the memory is divided in several cell blocks with each block containing the codes associated with symbols to generate a particular frame of a plurality of frames with selector means allowing selection of a block of the plurality of blocks in the memory to obtain at output from the frame generator the frame corresponding to said selected block.

3. Generator in accordance with claim 1 **characterized in that** it comprises an asynchronous multiplexer.

4. Generator in accordance with claim 1 **characterized in that** the memory unit is a rewritable memory unit.

5. Telecommunication system comprising a frame generator in accordance with claim 1.

6. Method of generating frames in a programmable FPGA device for SDR applications to strand at output in predetermined frames a plurality of incoming symbols comprising the phases of memorizing in cells of a memory unit codes associated each with a symbol of said plurality, addressing sequentially the memory cells to cause the memory to emit in predetermined sequence the codes of the required symbols to form a desired frame, decoding the code output from the memory and commanding a multiplexer on the basis of the result of the decoding to start in sequence at output the incoming symbols in accordance with the desired frame.

7. Method in accordance with claim 6 comprising the further steps of dividing the cells in several blocks and in each block memorizing the codes associated with symbols necessary for generating a particular frame of a plurality of frames and selecting by choice a block of the plurality of blocks in the memory to obtain at output from the generator the frame corresponding to said selected block.
